# EUROPEAN PATENT APPLICATION

(11) **EP 4 787 440 A1**
(43) Date of publication of application: **05.08.2026**
(21) Application number: 24889125.1
(22) Date of filing: 06.11.2024
(51) Int. Cl.: H01M 4/04

(54) **PRE-LITHIATION PROCESS EQUIPMENT AND PRE-LITHIATION CONTROL METHOD**

(30) Priority: 06.11.2023 KR 20230151507
(71) Applicant: LG Energy Solution, Ltd., Seoul 07335 (KR)
(72) Inventor: LEE, Suck Hwan, Daejeon 34122 (KR); JOO, Mun Kyu, Daejeon 34122 (KR); LEE, Il Ha, Daejeon 34122 (KR); KIM, Min Chul, Daejeon 34122 (KR)
(74) Representative: Plasseraud IP
(86) International application number: PCT/KR2024/017428
(87) International publication number: WO 2025/100939

(57) **Abstract**

The present invention relates to pre-lithiation process equipment, and more specifically, relates to pre-lithiation process equipment capable of performing a physical pre-lithiation process by effectively controlling a reaction between an electrode and lithium. According to one example of the present invention, pre-lithiation process equipment may be provided, which comprises: a pre-chamber shielded from the outside and provided with an unwinder releasing an electrode roll; a main chamber shielded from the outside, where a lithium sheet having a lithium layer and a base layer and an electrode supplied from the pre-chamber are subjected to pre-lithiation through lamination, and provided with a rewinder winding the pre-lithiated electrode roll; and a shielding device provided between the pre-chamber and the main chamber, which are partitioned from each other, and provided to selectively communicate the pre-chamber and the main chamber.

## Description

### Technical Field

The present invention relates to pre-lithiation process equipment, and more specifically, relates to pre-lithiation process equipment capable of performing a physical pre-lithiation process by effectively controlling a reaction between electrodes and lithium, and a control method thereof.

### Background Art

Secondary batteries capable of charging and discharging have recently been widely used in various devices. Secondary batteries attract attention as an eco-friendly energy source capable of reducing air pollution, and the like, especially from existing vehicles, and the like, using fossil fuels.

Secondary batteries can be classified into lithium-ion batteries, lithium-ion polymer batteries, and the like, depending on constitutions of electrodes and electrolytes, and can be classified into rectangular batteries, pouch-type batteries, and cylindrical batteries, and the like, depending on shapes of battery cases.

An electrode assembly built into the battery case has a structure consisting of a positive electrode, a negative electrode, and a separator interposed between the positive electrode and the negative electrode, which can be referred to as a power generation element capable of charging and discharging. The electrode assembly can be classified into a jelly roll type in which the separator is interposed between long sheet-shaped positive and negative electrodes coated with active materials, and a stack type in which multiple positive and negative electrodes are sequentially stacked in a state where the separators are interposed.

The positive electrode and the negative electrode are formed by coating positive-electrode active materials on a positive-electrode current collector and negative-electrode active materials on a negative-electrode current collector, respectively. An aluminum thin film is generally used as the positive-electrode current collector, and a copper thin film is generally used as the negative-electrode current collector.

In the case of the negative electrode, a passivation film such as a solid electrolyte interface layer (SEI layer) is formed on the surface of the negative electrode upon initial charging. The passivation film prevents an organic solvent from being inserted into the negative electrode and suppresses a decomposition reaction of the organic solvent, thereby improving structure stabilization of the negative electrode and reversibility of the negative electrode and enabling uses as the negative electrode.

However, since the formation reaction of the passivation film is an irreversible reaction, there is a problem that it causes consumption of lithium ions and reduces a capacity of the battery. In addition, as a charging and discharging cycle of the battery is repeated, the consumption of lithium ions increases further, whereby there is a problem that the capacity decreases and a cycle life is lowered.

Accordingly, to solve such problems, pre-lithiation researches, in which lithium is inserted into the negative electrode in advance, are conducted. That is, pre-lithiation researches capable of increasing battery capacities and improving rapid charging performances are performed.

As a pre-lithiation method, a physical method of directly contacting lithium metal with a negative electrode surface and a method of connecting lithium metal and the negative electrode and then electrochemically charging have been attempted.

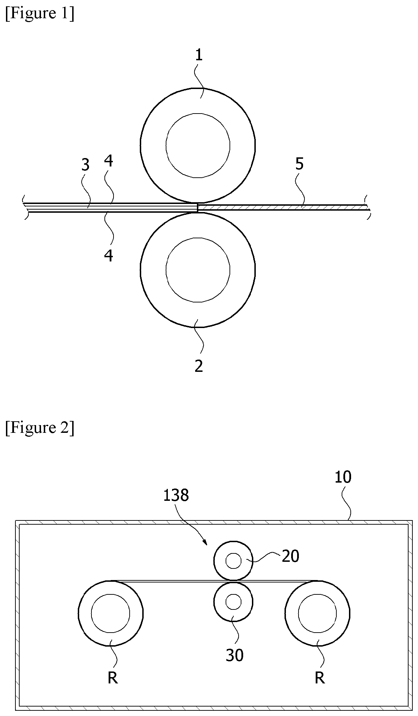

Figure 1 illustrates one example of a pre-lithiation process performed by a physical method.

A pre-lithiation process can be performed by supplying a negative electrode 3 and a lithium sheet 4 together between an upper press roll 1 and a lower press roll 2, and depositing lithium on the negative electrode through a press pressure.

The lithium sheet 4 comprises a base layer and a lithium layer, where the lithium sheet in which the lithium layer is provided on the upper surface can be supplied to the lower portion of the negative electrode 3, and the lithium sheet in which the lithium layer is provided on the lower surface can be supplied to the upper portion of the negative electrode 3. Through this, the pre-lithiation through lithium lamination can be performed on both sides of the negative electrode 3. That is, it is possible to obtain the negative electrode 5 subjected to pre-lithiation through lithium lamination by the upper press roll 1 and the lower press roll 2.

The process of rolling an electrode and a lithium sheet to deposit lithium on a negative electrode can be called a lamination process. That is, the lamination process can be performed as one example of physical pre-lithiation.

However, although the pre-lithiation can be performed very simply through the lamination process and device, there is a concern that heat generation and ignition occur in the atmospheric state. That is, there is a possibility that the negative electrode and lithium cause a chemical reaction in the atmospheric state, whereby heat generation and ignition occur.

Therefore, although the pre-lithiation can be easily performed through the lamination process and device, it is not actively used due to these problems, and only experimental tests are conducted using manual devices.

### Disclosure

### Technical Problem

Through one example of the present invention, it is intended to provide pre-lithiation processes and equipment capable of effectively performing pre-lithiation.

Through one example of the present invention, it is intended to provide pre-lithiation processes and equipment capable of effectively controlling risk factors which can be involved in the pre-lithiation processes.

Through one example of the present invention, it is intended to provide pre-lithiation processes and equipment enhancing control efficiency by configuring a space where the entire pre-lithiation process is performed as a chamber shielded from the outside, and dividing the chamber into a plurality of sub-chambers distinct from each other and shielding them.

Through one example of the present invention, it is intended to provide pre-lithiation processes and equipment capable of efficiently and stably controlling an oxygen concentration by shielding a chamber where the oxygen concentration is intensively controlled and a chamber where the oxygen concentration is not controlled through a shielding device.

Through one example of the present invention, it is intended to provide pre-lithiation processes and equipment capable of efficiently and continuously performing lamination and aging by selectively shielding a main chamber where lamination is performed and an aging chamber where aging is performed.

### Technical Solution

In order to achieve the above-described objects, according to one example of the present invention, pre-lithiation process equipment may be provided, which comprises: a pre-chamber shielded from the outside and provided with an unwinder releasing an electrode roll; a main chamber shielded from the outside, where a lithium sheet having a lithium layer and a base layer and an electrode supplied from the pre-chamber are subjected to pre-lithiation through lamination, and provided with a rewinder winding the pre-lithiated electrode roll; and a shielding device provided between the pre-chamber and the main chamber, which are partitioned from each other, and provided to be selectively communicated with the pre-chamber and the main chamber.

The shielding device may have a complete shielding mode and a partial shielding mode. Such a shielding device may be a gate valve.

The partial shielding mode is a mode in which the shielding device is opened to the extent that only the electrode is supplied from the pre-chamber to the main chamber. That is, it may be referred to as a mode that the air communication between the pre-chamber and the main chamber is minimized.

The complete shielding mode is a mode in which the pre-chamber and the main chamber are completely shielded from each other. That is, it may be referred to as a mode that the mixing of the atmosphere between both chambers is prevented. Both chambers differ particularly in terms of whether the oxygen concentration is controlled. Particularly, the oxygen concentration control is not performed in the pre-chamber, and the oxygen concentration control at a very high level may be performed in the main chamber. Therefore, it is possible to more effectively perform the oxygen concentration control in the main chamber through the shielding device.

It is preferable that a nitrogen atmosphere for lowering a reaction between the electrode and lithium is formed inside the pre-chamber and the main chamber.

An oxygen atmosphere at a set concentration or lower may be formed inside the main chamber. It is preferable that the inside of the main chamber is controlled so that an oxygen atmosphere is formed independently of the inside of the pre-chamber. Preferably, the oxygen concentration may be actively controlled to a level of 10 ppm or less.

Upon replacement of the electrode roll in the pre-chamber, the pre-chamber and the main chamber may be shielded from each other through the shielding device, and upon performing the pre-lithiation process, the shielding through the shielding device may be released. That is, the shielding may be switched from complete shielding to partial shielding. This switching may be performed manually or automatically.

It is preferable that the main chamber is provided with a plurality of transfer rolls transferring and supporting the electrode and the lithium sheet, and a press roll performing lamination of the electrode and the lithium sheet. The press roll is composed of an upper roll and a lower roll, whereby the lithium layer may be deposited on the electrode through rolling.

It is preferable that the main chamber is provided with a lamination device in which the press roll, an unwinder releasing a lithium sheet roll, and a rewinder winding the lithium sheet roll after the lithium layer is removed after the lamination are provided.

That is, the supply and recovery of the lithium sheet for lamination may be provided in one lamination device. Through this, the chamber supplying the electrode and the chamber supplying lithium may be partitioned.

It is preferable that the press roll is a heating roll. Through this, the lamination may be performed more efficiently.

It is preferable that the lamination device is provided with a peeling device separating the lithium sheet from the pre-lithiated electrode after the lamination. It is preferable that a peel position is adjustable through the peeling device. It enables the lithium sheet to be separated at an optimal peel position. This means that by adjusting a peel angle, it enables the peeling to be performed at an optimal peel angle.

The lamination device may be provided with a vision device inspecting residual lithium particles in the lithium sheet after the lithium layer is removed.

It is preferable that the main chamber is provided with an inspection device vision-inspecting the pre-lithiated electrode after the lamination. The inspection device may comprise a vision device.

Therefore, according to the present example, it may inspect a degree of pre-lithiation, shape, angle, and the like by vision-inspecting the pre-lithiated electrode. In addition, by vison-inspecting the lithium sheet from which lithium has been removed, it may inspect the degree of pre-lithiation and a degree of completion, and the like. That is, it is possible to confirm and determine whether the pre-lithiation is performed optimally by doubly performing the vision inspection.

It is preferable that the transfer roll is a cooling roll for cooling reaction heat between the electrode and lithium. A cooling tube may be provided, which cools reaction heat between the electrode and lithium by providing cold air during transfer of the pre-lithiated electrode.

The cooling roll and the cooling tube may secure stability of the pre-lithiated electrode more effectively by directly cooling the pre-lithiated electrode.

A dry atmosphere at set humidity or lower may be formed inside the main chamber. In addition, a static electricity removal device for removing static electricity inside the main chamber may be provided. Therefore, the humidity and static electricity inside the main chamber are very actively controlled, whereby it is possible to significantly lower ignition dangerousness through moisture and static electricity.

In the present example, the pre-lithiation process equipment may be provided, which is characterized by comprising an aging chamber shielded from the outside and aging the pre-lithiated electrode roll.

A shielding device provided between the aging chamber and the main chamber, which are partitioned from each other, and provided to selectively communicate the aging chamber and the main chamber, may be provided. The shielding device may also be composed of a gate valve. The shielding device between the pre-chamber and the main chamber may be referred to as a first shielding device, and the shielding device between the main chamber and the aging chamber may be referred to as a second shielding device.

A nitrogen atmosphere for lowering a reaction between the electrode and lithium may be formed inside the aging chamber. Of course, the insides of the pre-chamber and the aging chamber may also be controlled with a nitrogen atmosphere.

It is preferable that the oxygen concentration inside the aging chamber is controlled stepwise. In addition, the temperature inside the aging chamber may be controlled through a chiller. An aging test may be performed under conditions of a temperature lower than room temperature and an oxygen concentration lower than the atmosphere while gradually increasing the temperature and the oxygen concentration.

The aging chamber may be provided with a transport transferring device for transferring the pre-lithiated electrode roll from the main chamber to the aging chamber.

It is preferable that the pre-chamber and the main chamber are provided with a door for internal and external access. It is preferable that the door is opened to allow access to the inside and outside of the chamber, and when the door is closed, the inside of the chamber is shielded from the outside.

In order to achieve the above-described objects, according to one example of the present invention, pre-lithiation process equipment may be provided, which comprises a main chamber shielded from the outside, where a lithium sheet having a lithium layer and a base layer, and an electrode are subjected to pre-lithiation through lamination, and provided with a rewinder winding the pre-lithiated electrode roll; an aging chamber shielded from the outside where the pre-lithiated electrode roll manufactured in the main chamber is transported and transferred, whereby an aging test of the pre-lithiated electrode roll is performed; and a shielding device provided between the main chamber and the aging chamber, which are partitioned from each other, and opened when the pre-lithiated electrode roll is transported to the aging chamber and provided to perform shielding between the main chamber and the aging chamber for the lamination and aging test.

In order to achieve the above-described objects, according to one example of the present invention, a control method of pre-lithiation process equipment comprising: a pre-chamber shielded from the outside and provided with an unwinder releasing an electrode roll; and a main chamber shielded from the outside, where a lithium sheet having a lithium layer and a base layer and an electrode supplied from the pre-chamber are subjected to pre-lithiation through lamination, and provided with a rewinder winding the pre-lithiated electrode roll may be provided, wherein the control method of pre-lithiation process equipment comprises: a lamination preparation step of forming a nitrogen atmosphere for lowering a reaction between the electrode and lithium inside the pre-chamber and the main chamber, and shielding communication of the main chamber with the pre-chamber through a shielding device to form an oxygen atmosphere at a set concentration or lower inside the main chamber independently of the inside of the pre-chamber; and a lamination step of performing lamination after the lamination preparation step.

The space of the main chamber is relatively larger than the space of the pre-chamber. It is preferable that the oxygen and nitrogen atmospheres in the pre-chamber interior space and the main chamber interior space are independently controlled. It is preferably controlled so that low-concentration oxygen and high-concentration nitrogen atmospheres are formed compared to the atmospheric state.

Replacement of the electrode may be necessary during the pre-lithiation process. At this time, only the pre-chamber may be opened. In this case, it is preferable that air communication between the main chamber and the pre-chamber is shielded by the shielding device. That is, the shielding with the atmosphere in the main chamber is maintained, and only the pre-chamber is communicated with the atmosphere, so that oxygen and nitrogen concentration control may be actively performed only in the pre-chamber later. In other words, oxygen and nitrogen concentration control in the main chamber may be performed only passively.

### Advantageous Effects

Through one example of the present invention, it is intended to provide pre-lithiation processes and equipment capable of effectively performing pre-lithiation.

Through one example of the present invention, it is intended to provide pre-lithiation processes and equipment capable of effectively controlling risk factors which can be involved in the pre-lithiation processes.

Through one example of the present invention, it is intended to provide pre-lithiation processes and equipment enhancing control efficiency by configuring a space where the entire pre-lithiation process is performed as a chamber shielded from the outside, and dividing the chamber into a plurality of sub-chambers distinct from each other and shielding them.

Through one example of the present invention, it is intended to provide pre-lithiation processes and equipment capable of efficiently and stably controlling an oxygen concentration by shielding a chamber where the oxygen concentration is intensively controlled and a chamber where the oxygen concentration is not controlled through a shielding device.

Through one example of the present invention, it is intended to provide pre-lithiation processes and equipment capable of efficiently and continuously performing lamination and aging by selectively shielding a main chamber where lamination is performed and an aging chamber where aging is performed.

### Description of Drawings

Figure 1 briefly illustrates one example of conventional pre-lithiation through rolling,
Figure 2 is a brief conceptual diagram of pre-lithiation process equipment according to one example of the present invention,
Figure 3 illustrates a front appearance of pre-lithiation process equipment according to one example of the present invention,
Figure 4 illustrates a pre-lithiation process sequence according to one example of the present invention,
Figure 5 illustrates cross-sections of an unwinder device and a first shielding device,
Figure 6 illustrates cross-sections of a lamination device, an inspection device, and a rewinder device,
Figure 7 illustrates an appearance of a transport transferring device, and
Figure 8 illustrates a control constitution of pre-lithiation process equipment according to one example of the present invention.

### Best Mode

Hereinafter, pre-lithiation process equipment according to one example of the present invention will be described in detail with reference to the attached drawings.

Figure 2 is a brief conceptual diagram of pre-lithiation process equipment according to one example of the present invention.

Conventionally, the pre-lithiation process has been performed manually, but unlike this, according to the present example, the pre-lithiation process equipment, in which a chamber 10 is provided, and a pre-lithiation process is performed within the chamber, may be provided.

It is preferable that the chamber 10 is a space shielded from the outside, wherein pre-lithiation is performed within the chamber 10. More specifically, it is preferable that a physical pre-lithiation process is performed. To this end, as an upper press roll 20 and a lower press roll 30 for performing lithium lamination are provided within the chamber 10, and an electrode and a lithium sheet are rolled between both rolls, the lithium may be deposited on the electrode. The upper press roll 20 and the lower press roll 30 may be referred to as a lamination roll 138.

Meanwhile, the lithium lamination within the chamber 10 may be performed using a roll-to-roll (R to R). In the roll-to-roll, the electrode and lithium sheet for the pre-lithiation process are continuously supplied through the rolls, so that the pre-lithiation process may be performed continuously. Then, the pre-lithiation electrode, in which the pre-lithiation process has completed, may be continuously recovered through the roll again. In other words, while the electrode roll is unwound, the pre-lithiation process may be performed, and then while the electrode roll is wound, the pre-lithiation process may be completed. Of course, the lithium sheet from which lithium has been removed may also be recovered in the form of a roll. Therefore, according to the present example, it is possible to increase productivity by performing the pre-lithiation process continuously and automatically.

In a physical pre-lithiation process, it is necessary to secure stability. That is, there is a possibility of heat generation and ignition occurrence upon the pre-lithiation process in the atmospheric state, so that environmental control including an appropriate oxygen concentration, and the like is required upon the process. That is, it is necessary to optimally control an air component ratio or an atmospheric condition, and the like in the chamber where the pre-lithiation process is performed. However, it is not desirable to control the same conditions throughout the entire process of the pre-lithiation process through the roll-to-roll. In other words, it is not desirable to control the chamber 10, in which the pre-lithiation process is performed, under the same atmospheric conditions without dividing it into details. This is because the optimized atmospheric conditions may be different depending on the detailed processes, and a specific atmospheric condition may be optimal for a specific detailed process, but may be unnecessary or cause adverse effects in other specific detailed processes.

Therefore, according to the present example, it is preferable that the chamber 10 is composed of multiple chambers rather than a single chamber, and that the inside of each chamber is controlled to have a specific internal environment.

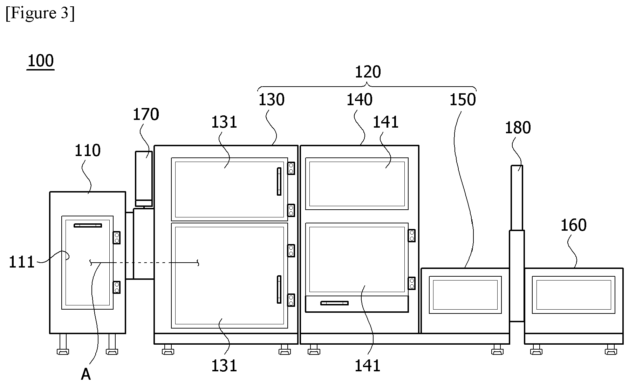

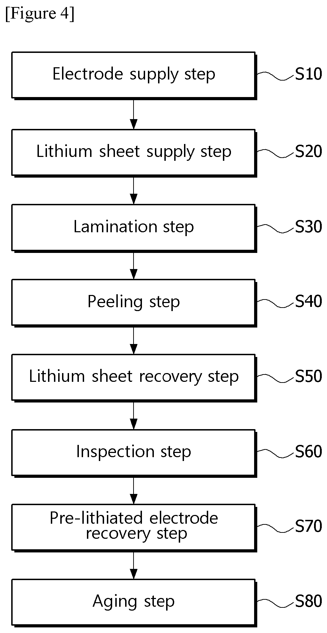

Figure 3 illustrates one example of pre-lithiation process equipment according to one example of the present invention. Figure 4 illustrates a sequence of a pre-lithiation process according to one example of the present invention.

As illustrated, the pre-lithiation process equipment 100 according to one example of the present invention may comprise multiple chambers 110, 120, 160 partitioned from each other and shielded from the outside. Then, detailed steps of the pre-lithiation process may be performed sequentially or simultaneously within the chamber.

To pre-lithiate an electrode, a pre-lithiation target electrode and a lithium sheet for supplying lithium to the electrode are required, and it can be regarded that after the pre-lithiation process is performed, the pre-lithiated electrode and the lithium sheet from which lithium has been removed are generated. Here, the pre-lithiation process is performed in the roll-to-roll manner, both the electrode and the lithium sheet are provided in the form of a roll and introduced into the pre-lithiation process equipment, and when the pre-lithiation process is completed, the pre-lithiated electrode and the lithium sheet from which lithium has been removed are also generated in the form of a roll.

Specifically, the pre-lithiation process may be performed starting with a step (S10) of supplying an electrode for performing pre-lithiation. The supply of the electrode may be performed by continuously transporting and supplying an electrode sheet while releasing the electrode in the form of a roll. The pre-chamber 110 may be provided for this electrode supply.

The pre-chamber 110 is provided to be shielded from the outside, wherein the internal environment, especially the temperature and atmospheric composition, may be controlled. The pre-chamber 110 is provided with a door 111, whereby the electrode roll may be replaced and introduced into the pre-chamber 110 by opening the door 111. The electrode A may be supplied from the inside of the pre-chamber 110 to the inside of the main chamber 120.

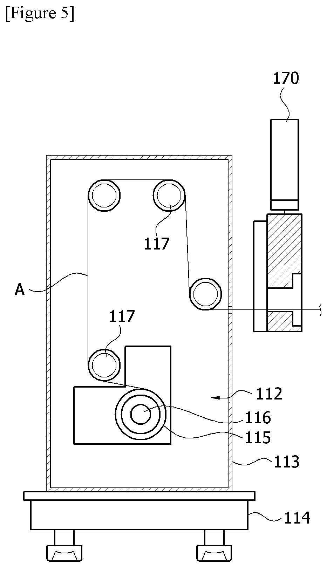

Figure 5 illustrates one example of a unwinder device 112 provided inside a pre-chamber 110.

The unwinder device 112 may comprise a main body 113 and a base 114 supporting the main body 113 with respect to the ground. The main body 113 may be provided with an unwinder 116, on which an electrode roll 115 is mounted, releasing the electrode roll 115. In addition, as the main body 113 is provided with a plurality of rolls 117, the electrode may be transported and supported. Such a roll 117 may be called a transfer roll or a support roll.

Meanwhile, to perform the pre-lithiation process through roll-to-roll (R to R), it is preferable that the lithium as well as the electrode is continuously supplied through the roll. To this end, a lithium sheet roll may be provided.

The lithium sheet may comprise a base layer and a lithium layer coated on the base layer. The base layer may be manufactured in the form of a synthetic resin film, and the lithium layer may be coated on the base layer to form a single continuous sheet. The base layer may be formed of, as one example, a PET (polyethylene terephthalate) material. The lithium sheet may be manufactured in the form of a roll, and then introduced into the pre-lithiation process equipment.

As shown in Figure 3, the pre-chamber 110 may be connected to the main chamber 120. The main chamber 120, like the pre-chamber 110, is shielded from the outside, wherein the internal environment, especially the temperature and atmospheric composition, may be controlled.

For the pre-lithiation process, a lithium sheet supply step (S20) may be performed. It is preferable that the lithium sheet supply is performed at the same time as the electrode supply. The lithium sheet roll may also be provided in the pre-chamber 110 just like the electrode roll. However, according to the present example, the lithium sheet roll is preferably provided in the main chamber 120.

Lithium is a very sensitive metal material, which has very high reactivity. Therefore, it is preferable that the space where the lithium sheet exists is very appropriately controlled in terms of external environments such as moisture, oxygen, static electricity, and temperature, to reduce unnecessary lithium reactions.

Therefore, it is preferable that the lithium sheet roll is provided in the main chamber 120 unlike the electrode roll. In other words, it is preferable that the environment inside the pre-chamber 110 and the environment inside the main chamber 120 are controlled differently from each other. This is because the internal environment of the main chamber 120 is very strictly controlled and control variables are also relatively large. This is because it may be unnecessary to expand such a control environment to the pre-chamber 110, and because the control difficulty increases as the control space expands.

Specifically, the main chamber 120 may be provided to perform a lamination step (S30) of the electrode and the lithium sheet. In addition, after the lamination step is performed, the lithium sheet must be separated from the pre-lithiated electrode. That is, a peeling step (S40), in which the sheet from which lithium is removed from the lithium sheet is separated from the pre-lithiated electrode, may be performed. It is preferable that such a peeling step (S40) is also performed in the main chamber 120.

It is preferable that after the peeling step (S40), the lithium sheet from which lithium is removed is wound on a roll and recovered. That is, a lithium sheet recovery step (S50) may be performed. In addition, an inspection step (S60) for the pre-lithiated electrode may be performed. That is, it may be inspected through a vision whether the degree of lithium deposition and the deposition location, and the like are appropriate.

The pre-lithiated electrode whose inspection is completed may be wound on a roll. That is, a pre-lithiated electrode recovery step (S70) may be performed.

Here, all detailed processes from the lithium sheet supply step (S20) to the pre-lithiated electrode recovery step (S70) may be referred to as processes in which lithium as a material is moved or used. Therefore, since appropriate control of lithium reactivity is required in these steps, it is preferable to perform them in one main chamber 120.

As described above, since the interior space of the pre-chamber 110 is unrelated to lithium as a material, it is preferable that the internal environment control of the pre-chamber is performed in a different aspect from the internal environment control of the main chamber 120. On the other hand, the environment control is performed in the main chamber 120 through a wide variety of control variables. As the space with many environment control variables expands, the control becomes more difficult, so that equipment costs and process costs inevitably increase. Therefore, it is preferable that the pre-chamber 110 and the main chamber 120 are separated from each other.

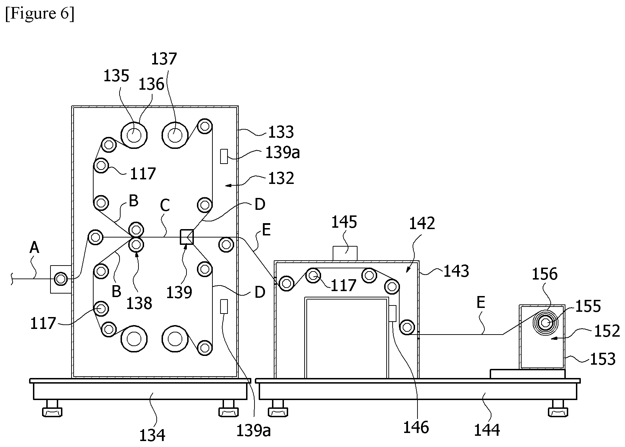

Figure 6 illustrates one example of devices provided inside a main chamber 120.

A lamination device 132, an inspection device 142, and a recovery device for recovering a pre-lithiated electrode, i.e. a rewinder device 152 may be provided inside the main chamber 120.

The lamination device 132 comprises a main body 133, and the main body is provided with a plurality of rolls 117, whereby an electrode, a lithium sheet, or a pre-lithiated electrode may be transported and supported.

Specifically, the lamination device 132 may be provided with a lamination roll 138. The lamination roll may be provided in the form of upper and lower press rolls. The lamination roll138 may be provided so that the supplied electrode A and lithium sheet B are pressurized and discharged.

The sheet C discharged after lamination is completed may be then separated into a pre-lithiated electrode E and a sheet D from which lithium has been removed by passing through the peeling device 139. That is, the peeling device 139 may also be provided in the lamination device 132.

The peeling device 139 may be provided so that the peel position or the peel angle is adjustable. Through this, it is possible to perform effective and efficient lamination.

The lamination device 132 may be provided with an unwinder 135 releasing a lithium sheet roll 136 to supply a lithium sheet. In addition, the lamination device 132 may be provided with a rewinder 137 winding the lithium sheet roll from which lithium has been removed.

Meanwhile, as for an electrode, as one example, in the case of a negative electrode, it is common for an active material to be coated on both sides of a negative-electrode current collector. Therefore, it is preferable that the pre-lithiation is also performed on both sides of the negative-electrode current collector. Therefore, in the present example, it is preferable that the unwinder 135 and the rewinder 137 are provided as an up-and-down pair to provide the upper and lower surfaces of the electrode A, respectively, with lithium sheets.

A base 134 may be provided at the lower portion of the main body 133, and the lamination device 132 may be firmly fixed to the ground through the base 134.

The electrode E in which the lamination has been completed through the lamination device 132 may be transferred to the inspection device 142. The inspection device 142 may be referred to as a device for inspecting the pre-lithiated electrode.

The inspection device 142 may comprise a main body 143 and a plurality of transfer rolls 117 provided in the main body 143. A vision device 145, 146 inspecting the pre-lithiated electrode E continuously transferred through the transfer rolls 117 may be provided. The vision device 145, 146 may inspect the state and degree of lithium deposition on the electrode by photographing the upper and lower portions of the electrode.

The pre-lithiated electrode E in which the inspection has been completed through the inspection device 142 may be rewound in the form of a roll through the rewinder device 152. The rewinder device 152 may comprise a main body 153 and a rewinder 155, and a roll 156 of the pre-lithiated electrode E may be formed through the rewinder 155.

The rewinder device 152 may comprise a separate base, and the base 144 of the inspection device 142 may be shared as the base of the rewinder device 152.

Meanwhile, the inspection device 142 is a device for determining whether the pre-lithiation of the pre-lithiated electrode is appropriate, and the like. In addition to the inspection device 142, a vision device 139a for inspecting the degree or state of lithium removal of the lithium sheet from which lithium has been removed may be provided. That is, it is possible to inspect whether lithium particles remain, and their degree. The vision device 139a may also be a vision inspection device and may be provided in the lamination device 132.

As one example, it may be determined that lithium lamination is evenly performed in the pre-lithiated electrode, but only a portion of the thickness of the lithium layer may be pre-lithiated. The remaining lithium layer may be confirmed with the vision before the recovery of the lithium sheet. In this case, it may be determined that lithium lamination is not effectively performed.

The main chamber 120 is a space using lithium, and the lithium moves in the inside of the main chamber 120 as the process progresses. As one example, the lithium moves along the lamination device 132, the inspection device 142, and the rewinder device 152.

At this time, the lamination device 132, the inspection device 142, and the rewinder device 152 may be accessed from the outside. Therefore, the inside of the main chamber 120 is one space, but it may be divided into a lamination chamber 130, an inspection chamber 140, and a recovery chamber 150 from the outside.

A lamination device 132 may be provided inside the lamination chamber 130, and the lamination device 132 may be accessed from the outside through a door 131. Replacement and introduction of the lithium sheet and recovery of the lithium sheet after pre-lithiation may be performed through the door 131. Here, since the pre-lithiation is performed on both up and down sides of the electrode, it is preferable that the door 131 is composed of an upper door and a lower door. Of course, it may be preferable that the door 131 has a window for checking operation of the lamination device 132 from the outside.

An inspection device 142 may be provided inside the inspection chamber 140, and the inspection device 142 may be accessed from the outside through the door 141. A display is provided on the front surface of the inspection chamber 140, whereby it is possible to check information on the pre-lithiation process from the outside. It may be preferable that the door 141 has a window for checking operation of the inspection device 132 from the outside.

A rewinder device 152 may be provided inside the recovery chamber 150. It may be preferable that the recovery chamber 150 has a window for checking operation of the rewinder device 152 from the outside.

As shown in Figure 3, the pre-lithiation process equipment 100 according to the present example may comprise an aging chamber 160.

In the recovery chamber 150, the pre-lithiated electrode may be recovered in the form of a roll, and after the pre-lithiated electrode roll is transferred to the aging chamber 160, an aging step S80 may be performed.

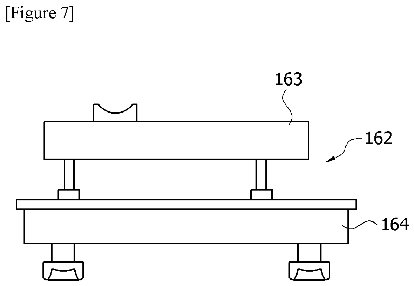

As shown in Figure 7, a transport transferring device 162 may be provided inside the aging chamber 160. The transport transferring device 162 may be referred to as a device transferring the pre-lithiated electrode rewound in the recovery chamber 150 to the aging chamber 160.

The transport transferring device 162 may be provided so that the main body 163 rotationally moves relative to the base 164 to transfer the pre-lithiated electrode.

Meanwhile, according to the present example, a shielding device for dividing sections of the chambers themselves may be provided. The shielding device may be provided in the form of a gate valve 170, 180 which can be operated manually or electrically.

First, the gate valve 170 may be provided between the pre-chamber 110 and the main chamber 120, particularly between the pre-chamber 110 and the lamination chamber 130. The gate valve 170 may be provided to have complete closure and partial closure modes.

The complete closure may be referred to as a mode completely blocking air communication between the pre-chamber 110 and the lamination chamber 130 when the pre-lithiation process is not performed. As one example, the gate valve 170 may be completely closed while the electrode roll is replaced inside the pre-chamber 110.

The partial closure may be referred to as a mode supplying the electrode from the pre-chamber 110 to the lamination chamber 130 when the pre-lithiation process is performed. It may be referred to as a mode in which air communication between both chambers is minimized and only the electrode may pass.

In addition, a gate valve 180 may be provided between the main chamber 120 and the aging chamber 160, especially between the recovery chamber 150 and the aging chamber 160. The gate valve 180 may have complete closure and partial closure modes. The partial closure may also be a complete opening mode.

The partial closure or complete opening may be referred to as a mode in the case of transporting and transferring the pre-lithiated electrode from the recovery chamber 150 to the aging chamber 160.

The complete closure may be referred to as a mode in the case where the lamination is performed in the main chamber 120 and the aging is performed in the aging chamber 160.

The internal environments of the respective chamber may be independently controlled by completely or partially shielding the insides of the chambers from each other through the gate valve 170, 180.

A nitrogen atmosphere may be formed inside the chamber, to reduce the reaction between the electrode and lithium. Such a nitrogen atmosphere may be commonly formed in all chambers 110, 120, 160.

The oxygen concentration inside the main chamber 120 may be controlled. This is because the ignition possibility due to the electrode lithium reaction increases as the oxygen concentration increases. As one example, when the average oxygen concentration in the atmosphere is 21%, the oxygen concentration inside the main chamber 120 may be actively controlled to a level of 10 ppm or less.

Through the active control of such an oxygen concentration, it is possible to effectively control an electrode lithium reaction rate.

Here, it can be known that the oxygen concentration control inside the main chamber 120 is at a very high level. Then, in the pre-chamber 110 and the aging chamber 160 where lamination is not performed, the oxygen concentration control may be unnecessary or at a low level. Therefore, it is preferable to enable shielding between the chambers through the gate valves 170, 180.

As one example, when the lamination is completed in the main chamber 120 while being controlled to an oxygen concentration of 10 ppm or less, the oxygen concentration inside the main chamber 120 rapidly increases upon complete opening of the gate valve 170. Thereafter, it may take a lot of time and energy to control the oxygen concentration inside the main chamber 120 back to the level of 10 ppm. Therefore, it is possible to increase ease and an efficiency of the oxygen concentration control by using a shielding device between chambers such as a gate valve.

Meanwhile, it is preferable that the oxygen concentration control is also performed in the aging step performed in the aging chamber 160. In the aging chamber, it is possible to secure stability of the pre-lithiated electrode by exposing the pre-lithiated electrode in a controlled environment for a certain period. Here, the oxygen concentration control may be performed in units of 1%. That is, the oxygen concentration may be controlled to a level capable of increasing or decreasing the oxygen concentration per certain period in units of 1%.

In addition, an aging test may be performed through the temperature control inside the aging chamber 160. The temperature inside the aging chamber 160 may be controlled to approximately 16°C or more through a chiller. The temperature control may also include controlling increases or decreases the temperature stepwise.

It can be regarded that moisture control is also very important along with the oxygen concentration control. In addition, it can be regarded that static electricity control is also very important. This is because moisture increase and static electricity increase also increase the possibility of heat generation and ignition in the lamination.

The moisture inside the main chamber 120 may be controlled to, as one example, a level of 1 ppm. That is, the ignition possibility due to moisture may be significantly reduced by actively controlling the inside of the main chamber 120 to a dry room.

The static electricity level inside the main chamber 120 may also be very actively controlled. As one example, the ignition possibility due to static electricity may be significantly reduced by removing static electricity in the main chamber 120 using an X-ray ionizer.

The active control of moisture and static electricity may be performed more effectively and efficiently through shielding using a gate valve 170, 180.

Meanwhile, since reaction heat is generated in the pre-lithiation step, it is necessary to cool the pre-lithiated electrode. This cooling may be performed by cooling the transfer roll 117. As one example, cooling water may be supplied to the transfer roll 117. The cooling water may be supplied using a PCW process cooling water system. As one example, the pre-lithiated electrode may also be cooled through a cooling tube. It enables cold air to be supplied to the transferred electrode by installing a cooling tube vortex tube near the transfer roll 117.

The pre-lithiation according to the present example may be referred to as lamination depositing lithium on the electrode through rolling. Therefore, to increase a deposition efficiency, it is preferable that heat is applied. To this end, a heating roll may be applied to the lamination roll. That is, it is possible to increase the deposition efficiency by applying the heat as well as the pressure. Then, as described above, the cooling roll or the cooling tube may be used, for the reaction heat removal after deposition.

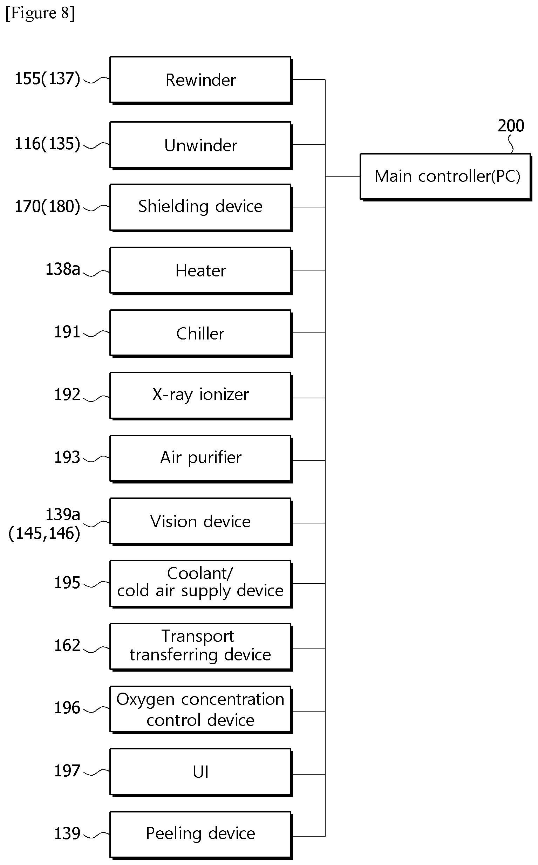

Figure 8 illustrates one example of a control constitution of pre-lithiation process equipment according to the present example.

A main controller (PC) 200 may be provided to control the operation of the entire pre-lithiation process equipment.

The driving of multiple rewinders 155, 137 and unwinders 116, 135 is controlled, whereby the pre-lithiation may be performed at a pre-lithiation rate.

Complete shielding, partial shielding, or complete opening through the shielding device 170, 180 may be controlled through the main controller 200, and may be performed manually.

To lower the reactivity of lithium, it is preferable to lower the temperature, but for lamination, it is preferable to raise the temperature. Therefore, more effective lamination may be performed by raising the temperature of the electrode and lithium at a position where lamination is performed. To this end, it is preferable that the control of the heater 138a supplying the lamination roll 138 with heat is accompanied.

Of course, various cooling means may be provided before and after lamination, for lowering the reactivity of lithium. As one example, a coolant/cold air supply device 195 is provided, it is possible to cool the pre-lithiated electrode by cooling the transfer roll, or it is also possible to cool it by supplying the pre-lithiated electrode with cold air. Such a coolant/cold air supply device 195 may be performed through the control of the main controller 200.

A chiller 191 for temperature control inside the chamber, particularly, cooling the inside of the chamber to room temperature or lower may be provided. Particularly, the temperature inside the aging chamber 160 may be controlled through the chiller 191.

For removing static electricity inside the main chamber 120, the operation of the X-ray ionizer 192 may be controlled. As the space requiring static electricity removal increases, the capacity of the X-ray ionizer must increase, and the control efficiency may be lowered. Therefore, it is preferable that the static electricity removal is performed only in the main chamber without being performed in the pre-chamber and the aging chamber.

The operation of the vision device 139a, 145, 146 for checking and determining whether lamination is appropriate may be controlled.

The control of the lamination rate and the peel angle through the peeling device 139 may be performed by reflecting the confirmation and determination results of the vision device.

The main controller 200 may control the operation of various UIs 197, or perform lamination process control based on information input through the UIs 197. The UI 197 may comprise multiple displays or input means.

Meanwhile, it is preferable that the air quality inside the chamber is appropriately controlled. Removal of foreign substances may be required, and to this end, operation of an air purifier 193 may be controlled. The air purifier 193 may be provided to control the air quality of the entire chamber. As one example, it may be provided for air circulation and nitrogen atmosphere composition.

As described above, the oxygen concentration inside the main chamber 120 is controlled to a very strict degree. To this end, an oxygen concentration control device 196 may be provided and controlled. The oxygen concentration inside the aging chamber 160 also needs to be controlled. However, since a concentration difference between both chambers is required, it is preferable that oxygen concentration control devices independent of each other are provided.

### Industrial Applicability

It is described in the Detailed Description of Invention.

## Claims

1. A pre-lithiation process equipment, **characterized by** comprising:
a pre-chamber shielded from the outside and provided with an unwinder releasing an electrode roll;
a main chamber shielded from the outside, where a lithium sheet having a lithium layer and a base layer and an electrode supplied from the pre-chamber are subjected to pre-lithiation through lamination, and provided with a rewinder winding the pre-lithiated electrode roll; and
a shielding device provided between the pre-chamber and the main chamber, which are partitioned from each other, and provided to selectively communicate the pre-chamber and the main chamber, wherein
the main chamber is controlled independently of the pre-chamber so that an oxygen atmosphere at a set concentration or lower is formed independently.

2. The pre-lithiation process equipment according to claim 1, **characterized in that**
a nitrogen atmosphere for lowering a reaction between the electrode and lithium is formed inside the pre-chamber and the main chamber.

3. The pre-lithiation process equipment according to claim 2, **characterized in that**
it is controlled so that the lamination is performed after the nitrogen atmosphere and the oxygen atmosphere inside the pre-chamber and the main chamber satisfy set conditions.

4. The pre-lithiation process equipment according to claim 3, **characterized in that**
upon replacement of the electrode roll in the pre-chamber, the pre-chamber and the main chamber are shielded from each other through the shielding device, and upon performing the pre-lithiation process, the shielding through the shielding device is released.

5. The pre-lithiation process equipment according to claim 1, **characterized in that**
the main chamber is provided with a plurality of transfer rolls transferring and supporting the electrode and the lithium sheet, and a press roll performing lamination of the electrode and the lithium sheet.

6. The pre-lithiation process equipment according to claim 5, **characterized in that**
the main chamber is provided with a lamination device in which the press roll, an unwinder releasing a lithium sheet roll, and a rewinder winding the lithium sheet roll after the lithium layer is removed after the lamination are provided.

7. The pre-lithiation process equipment according to claim 6, **characterized in that**
the press roll is a heating roll.

8. The pre-lithiation process equipment according to claim 6, **characterized in that**
the lamination device is provided with a peeling device separating the lithium sheet from the pre-lithiated electrode after the lamination.

9. The pre-lithiation process equipment according to claim 8, **characterized in that**
the lamination device is provided with a vision device inspecting residual lithium particles in the lithium sheet after the lithium layer is removed.

10. The pre-lithiation process equipment according to claim 5, **characterized in that**
the main chamber is provided with an inspection device vision-inspecting the pre-lithiated electrode after the lamination.

11. The pre-lithiation process equipment according to claim 5, **characterized in that**
the transfer roll is a cooling roll for cooling reaction heat between the electrode and lithium.

12. The pre-lithiation process equipment according to claim 5, **characterized in that**
a cooling tube is provided, which cools reaction heat between the electrode and lithium by providing cold air during transfer of the pre-lithiated electrode.

13. The pre-lithiation process equipment according to claim 5, **characterized in that**
a dry atmosphere at set humidity or lower is formed inside the main chamber.

14. The pre-lithiation process equipment according to claim 5, **characterized in that**
a static electricity removal device for removing static electricity inside the main chamber is provided.

15. The pre-lithiation process equipment according to claim 1, **characterized by** further comprising:
an aging chamber shielded from the outside and aging the pre-lithiated electrode roll.

16. The pre-lithiation process equipment according to claim 15, comprising:
a second shielding device provided between the aging chamber and the main chamber, which are partitioned from each other, and provided to selectively communicate the aging chamber and the main chamber.

17. The pre-lithiation process equipment according to claim 16, **characterized in that**
a nitrogen atmosphere for lowering a reaction between the electrode and lithium is formed inside the aging chamber.

18. The pre-lithiation process equipment according to claim 17, **characterized in that**
an oxygen concentration inside the aging chamber is controlled stepwise.

19. The pre-lithiation process equipment according to claim 17, **characterized in that**
the aging chamber is provided with a transport transferring device for transferring the pre-lithiated electrode roll from the main chamber to the aging chamber.

20. A control method of pre-lithiation process equipment comprising: a pre-chamber shielded from the outside and provided with an unwinder releasing an electrode roll; and a main chamber shielded from the outside, where a lithium sheet having a lithium layer and a base layer and an electrode supplied from the pre-chamber are subjected to pre-lithiation through lamination, and provided with a rewinder winding the pre-lithiated electrode roll, wherein the control method of pre-lithiation process equipment comprises:
a lamination preparation step of forming a nitrogen atmosphere for lowering a reaction between the electrode and lithium inside the pre-chamber and the main chamber, and shielding communication of the main chamber with the pre-chamber through a shielding device to form an oxygen atmosphere at a set concentration or lower inside the main chamber independently of the inside of the pre-chamber; and
a lamination step of performing lamination after the lamination preparation step.
